# DEMANDE DE BREVET EUROPEEN

(11) **EP 4 729 874 A1**
(43) Date de publication de la demande: **22.04.2026**
(21) Numéro de dépôt: 25207818.3
(22) Date de dépôt: 09.10.2025
(51) Int. Cl.: F41G 7/00, G01S 7/40, G09B 9/00, G01S 7/497, F41J 2/00, F41J 9/08

(54) **PROCÉDÉ ET SYSTÈME DE SIMULATION DE CIBLES AÉRIENNES**

(30) Priorité: 15.10.2024 FR 2411112
(71) Demandeur: MBDA France, 92350 Le Plessis-Robinson (FR)
(72) Inventeur: LE LOUËT, Florian, 92350 Le Plessis-Robinson (FR); BOUDAUD, Alexis, 92350 Le Plessis-Robinson (FR); PONGE, Adrian, 92350 Le Plessis-Robinson (FR); CAMPENON, Baptiste, 92350 Le Plessis-Robinson (FR); CHIKH, Rémy, 92350 Le Plessis-Robinson (FR)
(74) Mandataire: Gevers & Orès

(57) **Abrégé**

- Le système (1) de simulation de simulation de cibles aériennes comporte au moins un ensemble (7) de drones (8A, 8B), au moins l'un (8B) des drones de l'ensemble (7) de drones étant équipé d'un générateur de signal (11) d'un premier type et au moins un autre drone (8A) de l'ensemble (7) étant équipé d'un générateur de signal (12) d'un second type, ledit système (1) comportant un dispositif de synchronisation configuré pour synchroniser les drones (8A, 8B) de l'ensemble (7) de drones afin qu'ils simulent une seule et même cible (2A), ledit système (1) permettant ainsi de tester des senseurs (4, 5) de types différents d'un système de surveillance (3) et étant ainsi particulièrement approprié pour faire partie d'un système de test (9) destiné à tester un système de surveillance (3) multi-senseur hétérogène.

## Description

### Domaine technique

La présente invention concerne un procédé et un système de simulation de cibles aériennes.

Bien que non exclusivement, un tel système de simulation de cibles aériennes peut être utilisé pour tester la capacité de systèmes précisés ci-dessous à détecter et à suivre des cibles aériennes, c'est-à-dire des engins volants (tels que, par exemple, des avions, des hélicoptères, des drones ou des missiles) également précisés ci-dessous.

### Etat de la technique

Par le document EP3 296 760 B1, on connaît un procédé et un système de test de systèmes radar. Ce système de test comprend un drone que l'on fait voler à proximité du système radar à tester. Ce drone est équipé de moyens aptes à recevoir des signaux radar du système radar, à traiter les signaux radars reçus, à générer un signal radar de réponse et à émettre ce signal radar de réponse en direction du radar. Ce signal radar de réponse est formé de manière à simuler un écho radar d'une cible mobile fictive que l'on veut simuler. Cette cible mobile fictive peut représenter un missile balistique.

Ce système de test présente l'inconvénient d'être en mesure de tester uniquement des systèmes radar.

Or, un système de protection, destiné notamment à protéger un site ou des navires contre des attaques aériennes potentielles, comprend, généralement, différents moyens (ou senseurs) de détection de cibles ennemies, et pas uniquement des systèmes radar. Le système de test usuel précité n'est donc pas en mesure de tester un système de surveillance, tel qu'utilisé en général actuellement, notamment de type multi-senseur hétérogène.

Il existe donc un besoin de pouvoir disposer d'un système permettant d'aider à tester un système de surveillance, comprenant notamment des moyens (ou senseurs) de détection de cibles aériennes de types différents.

Par ailleurs, on connaît :
- par le document US 11 987 355 B2, un système utilisant un seul drone pour simuler un essaim de drones à partir de plusieurs émulateurs de drones ;
- par le document CN 214 225 772 U, un système pourvu d'un drone comprenant plusieurs générateurs de signal ;
- par le document KR 102 618 923 B1, un système comprenant un drone pourvu de plusieurs générateurs de signal différents ; et
- par le document ES 1 275 188 U, un drone porteur d'un transpondeur.

### Exposé de l'invention

La présente invention a pour objet de satisfaire le besoin précité. Elle concerne un système de simulation d'au moins une cible aérienne, qui comprend au moins un ensemble de drones, chacun des drones étant équipé d'un générateur de signal apte à émettre un signal représentatif d'une cible aérienne à simuler.

Selon l'invention, au moins l'un des drones de l'ensemble de drones est équipé d'un générateur de signal d'un premier type et au moins un autre drone de l'ensemble de drones est équipé d'un générateur de signal d'un second type (différent dudit premier type), et ledit système comporte un dispositif de synchronisation configuré pour synchroniser les drones de l'ensemble de drones afin qu'ils simulent une seule et même cible.

Ainsi, grâce à l'invention, le système de simulation de cibles aériennes est en mesure de former et d'émettre, par l'intermédiaire de générateurs de signal différents montés sur au moins deux drones, des signaux de types différents (par exemple au moins un signal radiofréquence et au moins un signal infrarouge). De plus, les drones sont synchronisés, comme précisé ci-dessous, de sorte que les signaux de types différents permettent de simuler une seule et même cible aérienne.

Ainsi, si ce système de simulation de cibles aériennes est utilisé pour tester un système, notamment un système surveillance et/ou les différentes chaînes d'un système d'arme, il est en mesure de tester, à la fois, des senseurs (ou moyens de détection) différents, par exemple un radar et un senseur infrarouge, de ce système. De plus, il permet ainsi de tester sur une même zone des moyens de détection (ou senseurs) qui sont localisés à des endroits différents. Il est également en mesure de tester des senseurs situés sur plusieurs zones. A titre d'illustration, les senseurs peuvent être montés à poste fixe (en permanence), ou être déployés sur des véhicules ou sur des navires (non en permanence), en étant montés par exemple sur des trépieds.

Dans le cadre de la présente invention, on entend par « zone » une partie de surface (terrestre ou maritime) ou d'éléments installés sur une telle partie de surface. Il peut notamment s'agir d'un site, en particulier terrestre, ou bien d'un ou de plusieurs bâtiments ou structures terrestres ou bien maritimes (tels que des navires ou une zone entourant un ou plusieurs navires). On peut également envisager une zone mobile telle qu'un convoi, terrestre ou maritime.

Le système de simulation de cibles aériennes est donc particulièrement approprié pour faire partie d'un système de test destiné à tester un système (notamment, mais non exclusivement de surveillance) multi-senseur hétérogène (c'est-à-dire comportant une pluralité de senseurs (ou capteurs ou détecteurs) employant des technologies différentes, qui utilisent, par exemple, au moins un signal radiofréquence et un signal infrarouge).

Plus particulièrement, bien que non exclusivement, une cible aérienne apte à être simulée par le système de simulation peut correspondre à l'un des engins volants suivants :
- un avion, par exemple un avion de chasse, un avion de ligne ou un avion de tourisme ;
- un planeur, notamment un planeur hypersonique, ou un ULM, et de manière plus générale tout objet volant de type aérobie ;
- un missile, par exemple balistique (manœuvrant ou non) ou hypersonique ou subsonique ou supersonique ;
- une roquette.

Dans un mode de réalisation particulier, la cible aérienne peut également correspondre à un engin mobile qui se déplace à une faible vitesse et à une hauteur (par rapport au sol) proche de 0 mètre. Un tel engin mobile peut notamment correspondre à un navire.

Avantageusement, le dispositif de synchronisation est configuré pour synchroniser les drones de l'ensemble de drones, à la fois :
- en temps (temporellement) ;
- dans l'espace (spatialement, à savoir en position et en attitude) ; et
- pour être cohérents par rapport à la cible aérienne qu'ils simulent et pour éviter des risques de collision (entre les drones et des éléments extérieurs au système).

De plus, de façon avantageuse, le système de simulation comporte au moins l'un des types suivants de générateur de signal :
- un générateur de signal radiofréquence ;
- un générateur de signal infrarouge ;
- un générateur de signal visible ;
- un générateur de signal d'identification ami.

Dans un mode de réalisation préféré, ledit système de simulation de cibles aériennes comprend une pluralité d'ensembles de drones, chacun desdits ensembles de drones étant configuré pour simuler une cible aérienne (différente de la cible aérienne simulée par un autre ensemble de drones). Ce mode de réalisation préféré permet donc de simuler simultanément une pluralité de cibles aériennes différentes, une telle situation correspondant par exemple à un scénario d'attaque pour lequel de nombreuses cibles (ou menaces) aériennes ennemies sont envoyées en même temps pour attaquer une zone à surveiller et à protéger. Dans un mode de réalisation particulier, ledit système de simulation de cibles aériennes comprend au moins deux ensembles de drones configurés pour simuler une même cible aérienne.

Par ailleurs, de façon avantageuse, ledit système de simulation de cibles aériennes comprend également un dispositif de gestion de mission configuré pour pouvoir communiquer avec les drones au moins d'un ensemble de drones.

Avantageusement, le dispositif de gestion de mission comporte au moins l'une des unités suivantes :
- au moins une unité de préparation de mission ;
- au moins une unité de réalisation de mission ;
- au moins une unité de contrôle de mission.

Par ailleurs, de façon avantageuse, ledit système de simulation de cibles aériennes comprend également au moins un dispositif de modification de trajectoire qui est configuré pour pouvoir modifier (en temps réel) la trajectoire d'au moins un drone. Avantageusement, le système de simulation de cibles aériennes comprend :
- au moins un dispositif de modification de trajectoire qui fait partie du dispositif de gestion de mission et qui est configuré pour émettre des ordres de correction de trajectoire au drone, qui sont générés automatiquement et/ou par un opérateur ; et/ou
- au moins un dispositif de modification de trajectoire qui est monté sur le drone et qui est configuré pour modifier la trajectoire dudit drone.

Dans un mode de réalisation particulier, au moins certains desdits drones sont des drones multicoptère, qui sont très maniables.

La présente invention concerne également un procédé de simulation de cibles aériennes, ledit procédé utilisant au moins un ensemble de drones, chacun des drones étant équipé d'un générateur de signal apte à générer un signal représentatif d'une cible aérienne à simuler.

Selon l'invention, ledit procédé est tel que :
- au moins l'un des drones de l'ensemble de drones est équipé d'un générateur de signal d'un premier type et au moins un autre drone de l'ensemble de drones est équipé d'un générateur de signal d'un second type différent du premier type ; et
- tous les drones de l'ensemble de drones sont synchronisés pour simuler une seule et même cible.

Avantageusement, les drones de l'ensemble de drones sont synchronisés, à la fois :
- en temps ;
- dans l'espace ; et
- pour être cohérents par rapport à la cible aérienne qu'ils simulent, et pour éviter des risques de collision (entre les drones et des éléments extérieurs au système).

La présente invention concerne, en outre, un système de test pour tester un système de surveillance (d'une zone), en particulier d'un système d'arme multi-senseur hétérogène, qui comprend ledit système de surveillance et au moins un système de simulation de cibles aériennes tel que celui décrit ci-dessus.

Avantageusement, le système de surveillance comprend comme senseur, au moins l'un des éléments suivants :
- un radar, un senseur optique (infrarouge, TV ou autre), et par exemple un goniomètre, un senseur coopératif (faisant partie d'un dispositif d'identification ami ou ennemi, par exemple de type IFF (pour « Identification Friend or Foe » en anglais) ou de l'infodrone, de l'ADSB, .... ou d'un système de simulation de communication (pour les systèmes ELINT)).

La présente invention concerne, en outre, un système d'arme multi-senseur hétérogène qui comprend au moins un système de test tel que précité.

Ledit système de simulation de cibles aériennes et/ou ledit système de test peuvent être utilisés dans de nombreuses applications différentes, et en particulier :
- pour la formation, notamment d'opérateurs du système de surveillance et/ou du système d'arme ;
- pour l'entraînement, notamment d'opérateurs du système de surveillance et/ou du système d'arme ;
- pour la calibration du système de surveillance et/ou du système d'arme ;
- pour des essais du système de surveillance et/ou du système d'arme ;
- pour la validation du système de surveillance et/ou du système d'arme ; et
- pour une démonstration.

La présente invention permet, de manière générale, de tester la chaîne complète d'un système d'arme, depuis la détection jusqu'à l'engagement (hors missile en vol), et ainsi au moins l'une des caractéristiques suivantes :
- la capacité de surveillance, de détection et de suivi de senseurs ;
- le bon comportement des algorithmes du système d'arme qui effectue la fusion de données, le traitement des données pour l'évaluation de la menace, le plan d'engagement, ... ; et
- la chaîne d'engagement avec le bon fonctionnement des algorithmes et des senseurs pendant cette phase.

### Brève description des figures

Les figures annexées feront bien comprendre comment l'invention peut être réalisée. Sur ces figures, des références identiques désignent des éléments semblables.
La figure 1 représente schématiquement un premier mode de réalisation particulier d'un système de simulation de cibles aériennes faisant partie d'un système de test.
La figure 2 est le schéma synoptique d'un drone faisant partie du système de simulation de cibles aériennes.
La figure 3 est le schéma synoptique d'un dispositif de gestion de mission faisant partie du système de simulation de cibles aériennes.
La figure 4 représente schématiquement un deuxième mode de réalisation particulier d'un système de simulation de cibles aériennes faisant partie d'un système de test.
La figure 5 représente schématiquement un troisième mode de réalisation particulier d'un système de simulation de cibles aériennes faisant partie d'un système de test.
La figure 6 est le schéma synoptique d'un procédé de simulation de cibles aériennes.
La figure 7 est le schéma synoptique d'un générateur radiofréquence faisant partie du système de simulation de cibles aériennes.

### Description détaillée

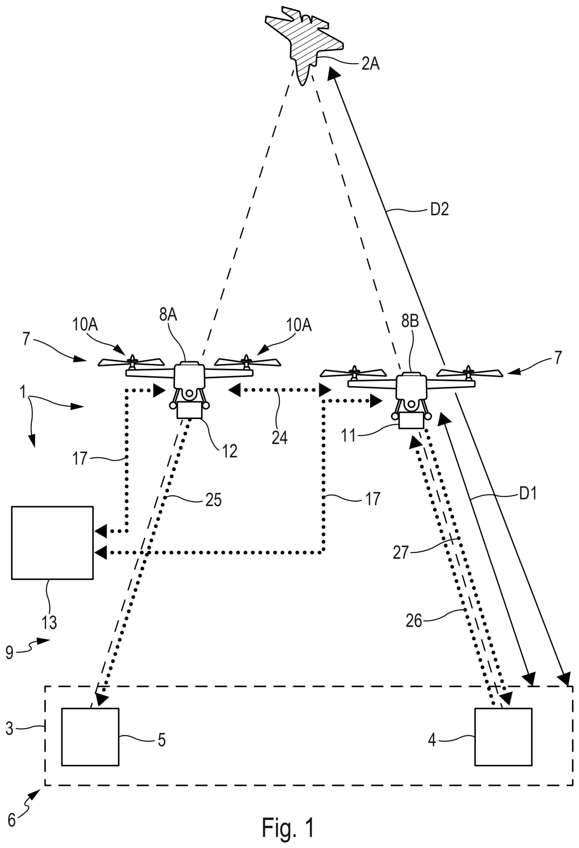

Le système 1 (de simulation de cibles aériennes) permettant d'illustrer l'invention et représenté schématiquement dans des modes de réalisation particuliers sur les figures 1, 4 et 5 est destiné à simuler des cibles aériennes 2.

Bien que non exclusivement, ce système 1 (de simulation de cibles aériennes) peut faire partie d'un système de test 9 destiné à tester un système de surveillance 3 d'au moins une zone (ci-après « système de surveillance 3 »). Le système de surveillance 3 est, de préférence, un système de surveillance de type multi-senseur hétérogène, c'est-à-dire qui comprend une pluralité de senseurs (ou capteurs ou détecteurs) hétérogènes (c'est-à-dire de types différents). Dans l'exemple de la figure 1, le système de surveillance 3 comprend, notamment, un radar 4 et un senseur (ou imageur) infrarouge 5. Le système de surveillance 3 peut également comprendre d'autres senseurs tels qu'un goniomètre ou un dispositif d'identification ami ou ennemi, comme précisé ci-dessous.

Le système de surveillance 3 est destiné à surveiller une zone géographique particulière autour de son installation. Cette zone géographique est de préférence une zone géographique terrestre, mais peut également être, au moins en partie, une zone maritime. Il peut notamment s'agir d'un site, d'un bâtiment, ou d'un ou de plusieurs navires ou d'un ou de plusieurs véhicules. On peut également envisager une zone mobile telle qu'un convoi, terrestre ou maritime.

Dans un mode de réalisation particulier, le système de surveillance 3 fait partie d'un système d'arme 6, qui est destiné par exemple à protéger cette zone géographique, et qui comprend, en plus du système de surveillance 3, des armes (non représentées) permettant en particulier de neutraliser des engins volants hostiles (notamment des engins volants hostiles, détectés par le système de surveillance 3). Dans ce cas, le système de test 9 est destiné à tester le système de surveillance 3 et/ou les différentes chaînes du système d'arme 6 incluant des senseurs uniquement alloués à la chaîne d'engagement par exemple.

Le système de surveillance 3 peut donc être déployé sur terre (à poste fixe, ou de façon mobile sur un véhicule terrestre), ou en mer (sur un navire, militaire ou civil). Il peut également être utilisé pour des systèmes non militaires, par exemple un système anti-drone d'un site sensible civil comme une centrale électrique, un réseau de senseurs d'un aéroport, ...

Dans le cadre de la présente invention, on entend par « simuler une cible aérienne » le fait de générer et d'émettre des signaux, précisés ci-dessous, qui permettent de faire croire à un système de surveillance, tel que le système de surveillance 3, que ces signaux proviennent d'une cible aérienne réelle.

Les cibles aériennes (identifiées par une référence 2, à laquelle on a ajouté des lettres A, B, C, D sur les figures pour les différencier entre elles) sont représentées en traits hachurés sur les figures 1, 4 et 5 pour bien mettre en évidence qu'elles sont simulées et donc virtuelles, et ne correspondent pas à un objet aérien réel. Ces cibles aériennes 2 peuvent représenter tout objet volant que l'on souhaite simuler, et en particulier un objet ou engin hostile (ou ennemi). Il peut notamment s'agir d'un avion militaire comme sur l'exemple des figures 1, 4 et 5 ou bien d'un drone (non représenté), d'un hélicoptère (non représenté) ou d'un missile (non représenté).

Plus généralement, dans le cadre de la présente invention, une cible aérienne 2 peut correspondre au moins à l'un des engins volants suivants :
- un avion, par exemple un avion de chasse, un avion de ligne ou un avion de tourisme ;
- un planeur, notamment un planeur hypersonique, ou un ULM, et de manière plus générale tout objet volant de type aérobie ;
- un missile, par exemple balistique (manœuvrant ou non) ou hypersonique ou subsonique ou supersonique ;
- une roquette.

Dans un mode de réalisation particulier, la cible aérienne peut également correspondre à un engin mobile qui se déplace à une faible vitesse et à une hauteur (par rapport au sol) proche de 0 mètre. Un tel engin mobile peut notamment correspondre à un navire.

Le système 1 comprend, comme représenté sur la figure 1, au moins un ensemble 7 de drones. L'ensemble 7 comprend une pluralité de drones 8. Pour différencier les drones 8 entre eux, on a ajouté des lettres A, B, ..., à la référence 8 sur les figures 1, 4 et 5.

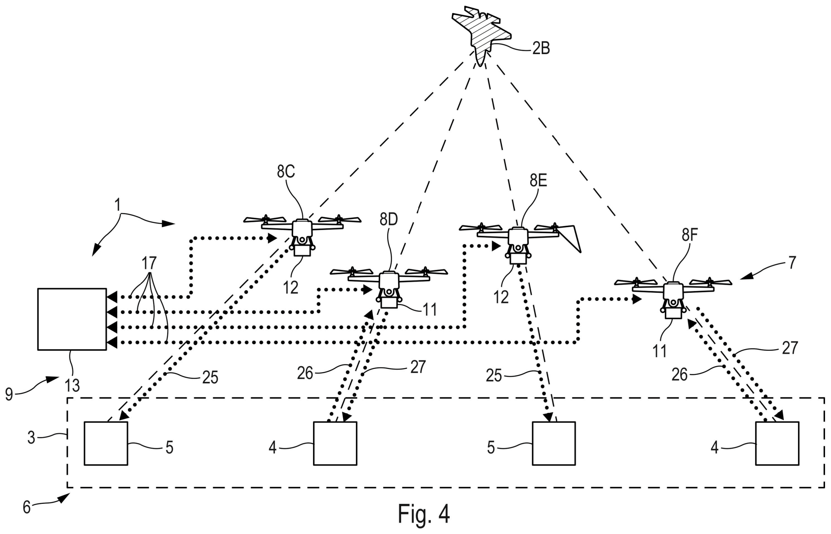

Dans un mode de réalisation particulier, chaque ensemble 7 de drones comprend un couple de drones (à savoir deux drones tels que les drones 8A et 8B de l'ensemble 7 de la figure 1). Bien entendu, il est également envisageable que l'ensemble 7 de drones comprenne plus de deux drones 8, par exemple trois ou quatre drones, comme précisé ci-dessous en référence à l'exemple de la figure 4.

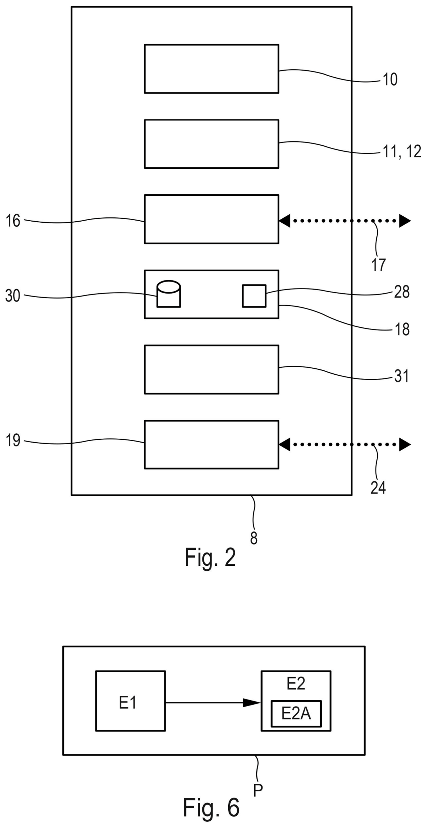

On a représenté sur la figure 2, à titre d'illustration non limitative, de façon très schématique, un drone 8, c'est-à-dire un aéronef sans pilote, faisant partie du système 1. Tous les drones 8A, 8B, ..., 8J du système 1 peuvent correspondre à ce drone 8 de la figure 2. Le drone 8 comprend des moyens 10 usuels (notamment des moyens de sustentation (voilures tournantes 10A du drone 8A (figure 1), ...) et de génération d'une force d'avancement), qui sont représentés de façon schématique sur la figure 2 et qui sont formés de manière à faire voler le drone 8.

Le drone 8 comporte d'autres équipements précisés ci-dessous.

Chacun des drones 8 de l'ensemble 7 du système 1 est équipé d'un générateur de signal 11 ou 12 apte à émettre un signal représentatif d'une cible aérienne 2 à simuler,

Selon l'invention, pour chaque ensemble 7 de drones, l'un des drones de l'ensemble 7 de drones, est équipé d'un générateur de signal d'un premier type, comme par exemple le drone 8A de la figure 1 qui est équipé d'un générateur de signal infrarouge 12, et un autre drone de l'ensemble 7 de drones est équipé d'un générateur de signal d'un second type (différent du premier type), comme par exemple le drone 8B de la figure 1 qui est équipé d'un générateur de signal radiofréquence 11.

Dans les exemples illustratifs et non limitatifs représentés sur les figures, sont représentés des générateurs de signal radiofréquence 11 et des générateurs de signal infrarouge 12 associés, respectivement, à des radars 4 et à des senseurs (ou imageurs) infrarouges 5.

Toutefois, dans le cadre de la présente invention, le système 1 :
- peut comprendre, en plus ou à la place d'un ou de plusieurs générateurs de signal radiofréquence et/ou d'un ou de plusieurs générateurs de signal infrarouge, un ou plusieurs générateurs de signal visible et/ou un ou plusieurs générateurs de signal d'identification ami et/ou un ou plusieurs générateurs de signal de communication (pour la goniométrie, mais aussi l'écoute électronique de type ELINT) ;
- peut être associé à de nombreux types de senseurs, et notamment à :
   ∘ des radars ;
   ∘ des senseurs optiques, de type infrarouge, TV ou autre, et également à des goniomètres ;
   ∘ des senseurs coopératifs (faisant partie d'un dispositif d'identification ami ou ennemi par exemple de type IFF (pour « Identification Friend or Foe » en anglais) ou infodrone, ou ADSB, .... ou d'un système ELINT).

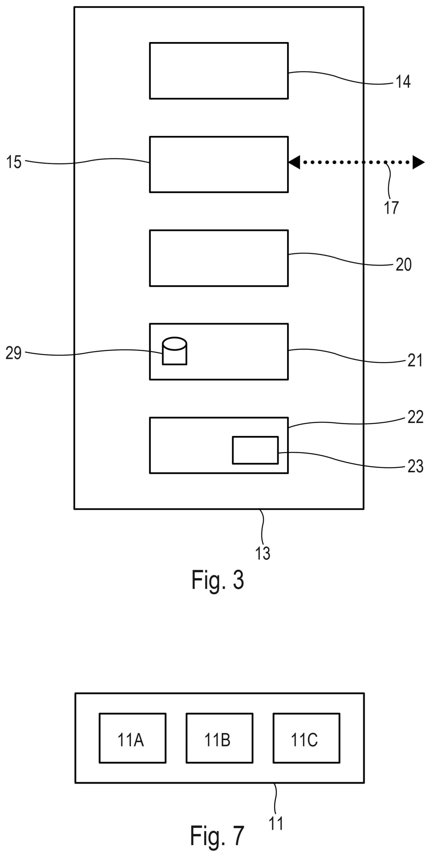

De plus, le système 1 comprend un dispositif de synchronisation 14 (figure 3) configuré pour synchroniser les drones 8 de l'ensemble 7 de drones afin qu'ils simulent une seule et même cible aérienne 2, comme dans l'exemple de la figure 1.

Plus précisément, le dispositif de synchronisation 14 est configuré pour synchroniser les drones de l'ensemble 7 de drones, à la fois :
- en temps (temporellement) ;
- dans l'espace (spatialement) ; et
- pour être cohérents par rapport à la cible aérienne 2 qu'ils simulent, et pour éviter des risques de collision entre les drones 8 et des éléments extérieurs au système 1.

Le dispositif de synchronisation 14 synchronise également les charges utiles afin qu'elles soient synchronisées en temps et en termes de paramètres (qui sont liés à chaque type de charge utile).

Le dispositif de synchronisation 14 fait partie d'un dispositif 13 de gestion de mission, représenté schématiquement sur la figure 3. Le dispositif 13 de gestion de mission qui fait partie du système 1 est apte à communiquer avec chacun des drones 8 de l'ensemble 7 de drones 8.

Pour ce faire, le dispositif 13 comporte une unité d'émission/réception 15 (figure 3) qui coopère avec une unité d'émission/réception 16 (figure 2) du drone 8 avec lequel il veut communiquer. Les unités d'émission/réception 15 et 16 sont aptes à échanger des informations, via l'émission et la réception d'ondes électromagnétiques, comme illustré par des doubles flèches 17 en pointillés sur les figures 1 à 5.

Ainsi, le système 1 est en mesure de générer, par l'intermédiaire d'au moins deux drones 8, tels que les drones 8A et 8B de la figure 1, des signaux de types différents (par exemple au moins un signal radiofréquence et au moins un signal infrarouge). De plus, les drones 8 sont synchronisés de sorte que les signaux de types différents permettent de simuler une seule et même cible aérienne, telle que la cible aérienne 2A de la figure 1.

Si le système 1 fait partie d'un système de test 9, il est ainsi en mesure de tester à la fois un radar 4 et un senseur infrarouge 5 du système de surveillance 3, c'est-à-dire des moyens de détection de types différents. Il permet également de tester sur un même site des moyens de détection (radar 4 et senseur infrarouge 5), localisés à des endroits différents.

Dans un mode de réalisation préféré, le drone 8 est également pourvu d'une unité centrale 18, comme représenté sur la figure 2.

Dans un mode de réalisation particulier, l'unité centrale 18 (ou calculateur) est notamment apte à déterminer automatiquement des ordres de guidage utilisés par les moyens 10 pour guider le drone 8. Le drone 8 peut ainsi être guidé automatiquement sans intervention (ou avec une intervention restreinte) d'un opérateur, par exemple pour éviter une collision avec un autre drone et tout simplement pour remplir sa mission, puisque c'est l'unité centrale 18 qui envoie périodiquement des ordres aux moyens 10 pour que la trajectoire à simuler soit correcte. Plus précisément, l'unité centrale 18 envoie des ordres à l'autopilote (qui est installé sur le calculateur de contrôle de vol) et c'est l'autopilote qui envoie les ordres au moyens 10.

Le drone 8 peut ainsi voler de façon autonome dans ce mode de réalisation particulier.

L'unité centrale 18 est également configurée pour générer des ordres à destination du générateur de signal 11, 12 pour qu'il émette le signal approprié.

Par ailleurs, dans un mode de réalisation particulier, le drone 8 comporte également une unité d'émission/réception 19 qui coopère avec une unité d'émission/réception 19 d'un autre drone 8 avec lequel il veut communiquer. Les unité d'émission/réception 19 de deux drones 8 (ou de tous les drones 8 de l'ensemble 7 ou de tous les drones 8 du système 1) sont ainsi aptes à échanger des informations, via l'émission et la réception d'ondes électromagnétiques, comme illustré par des doubles flèches 24 en pointillés sur les figures 1, 2 et 5.

Les échanges entre deux drones 8 peuvent être mis en œuvre de deux manières :
- soit directement entre les drones 8 via leurs unités d'émission/réception 19. Dans ce cas, des échanges peuvent également être réalisés avec le dispositif 13 au sol (s'il est prévu) ;
- soit en passant par le dispositif 13 au sol (qui sert de routeur).

De préférence, les informations échangées ont pour but d'empêcher une collision entre les deux drones. Pour ce faire, les drones s'informent, respectivement, de leur positionnement effectif.

Ces informations de positionnement peuvent également être utilisées pour corriger en temps réel le positionnement des drones 8 de manière à rester représentatifs d'une cible. Ainsi, à titre d'exemple, si le drone 8A ne respecte pas sa trajectoire par exemple à cause du vent, le calculateur 18 du drone 8B va corriger la trajectoire du drone 8B pour conserver un comportement de cible cohérent.

Par ailleurs, dans un mode de réalisation particulier, le drone 8 est pourvu, d'un dispositif de positionnement 31 (figure 2) configuré pour déterminer la position (géographique) du drone 8 dans l'espace. De préférence, le dispositif de positionnement 31 utilise un système de positionnement par satellites, par exemple de type GNSS (« Global Navigation Satellite System » en anglais) auquel il associe une solution d'amélioration de la précision de localisation, telle que par exemple une technique de cinématique temps réel de type RTK (pour « Real Time Kinematic » en anglais).

En outre, dans un mode de réalisation préféré, au moins certains des drones 8 du système 1, et de préférence l'ensemble des drones 8 du système 1, sont des drones multicoptère ou multirotor, c'est-à-dire des drones avec plus de deux voilures tournantes 10A (figure 1), c'est-à-dire plus de deux rotors générateurs de portance, et par exemple quatre, six ou huit voilures tournantes 10A. On utilise ainsi des drones 8 très maniables, qui sont en mesure de suivre toutes les trajectoires souhaitées, et notamment des trajectoires complexes.

Chaque drone 8 et le générateur de signal 11, 12 monté sur ce drone 8 sont contrôlés par l'unité centrale 18 qui est un calculateur embarqué.

De plus, ils sont :
- soit reliés au dispositif 13 de gestion de mission (situé par exemple au sol), et ceci par une liaison spécifique, comme illustré par les doubles flèches 17 en pointillés sur les figures 1 à 5 ;
- soit autonomes. Dans ce cas, on prévoit qu'un pilote puisse reprendre la main si nécessaire.

Dans les deux cas, ils peuvent également être reliés directement aux autres drones par une liaison spécifique, comme illustré par les doubles flèches 24 en pointillés sur les figures 1, 2 et 5.

Quant au dispositif 13 de gestion de mission, il est de préférence installé au sol. Dans une variante de réalisation précisée ci-dessous, il peut également être installé sur un navire. Par conséquent, les actions décrites ci-dessous qui sont réalisées par un opérateur à partir du sol, pourraient également être réalisées par un opérateur se trouvant sur un navire.

Le dispositif de gestion de mission 13, et en particulier une ou des unités 21 de réalisation de mission, peuvent être utilisés par un ou des opérateurs pour commander les drones à partir du sol ou depuis un navire lors d'une étape de réalisation de la mission, précisée ci-dessous. De préférence, bien que non exclusivement, on prévoit un seul opérateur. On peut toutefois également prévoir un opérateur par drone du système 1.

Le dispositif 13 de gestion de mission comporte, comme représenté sur la figure 3 :
- au moins une unité 20 de préparation de mission ;
- au moins une unité 21 de réalisation de mission ;
- au moins une unité 22 de contrôle de mission.

L'unité 20 de préparation de mission du dispositif 13 de gestion de mission est utilisée par un opérateur pour préparer la mission (de simulation de cibles aériennes et plus généralement de test) et notamment pour définir la trajectoire des drones 8, la trajectoire de la cible aérienne ou des cibles aériennes et les caractéristiques du signal émis par le générateur 11, 12 de chacun des drones 8.

Avec l'unité 20 est également réalisée une phase de positionnement des senseurs (en terrestre fixe), de définition des zones de vol, et de vérification de la cohérence des trajectoires des drones, et de calage fin de la trajectoire des cibles aériennes par rapport à la position des senseurs.

L'unité 21 de réalisation de mission du dispositif 13 de gestion de mission est destinée à la mise en œuvre de la mission (de simulation de cibles aériennes et plus généralement de test).

Quant à l'unité 22 de contrôle du dispositif 13 de gestion de mission, elle a pour but de contrôler la mission, lors de sa réalisation. Pour ce faire, l'unité 22 de contrôle de mission comprend (ou est associé à) au moins un dispositif de modification de trajectoire 23 qui est configuré pour modifier la trajectoire d'au moins un drone 8, comme précisé ci-dessous. Si le dispositif de modification de trajectoire 23 est utilisé pour modifier la trajectoire de la cible simulée, il doit modifier (via la liaison 17) la trajectoire de tous les drones 8 (simulant cette cible) et de tous les générateurs de signal correspondants pour pouvoir continuer de simuler correctement la cible.

Le système 1, tel que décrit ci-dessus, permet de mettre en œuvre un procédé P de simulation de cibles aériennes. Ce procédé P comprend, comme représenté sur la figure 6, notamment une étape E1 de préparation de la mission et une étape E2 de réalisation de la mission, au cours de laquelle est mise en œuvre une sous-étape E2A de contrôle de la mission.

Lors de l'étape E1 de préparation de la mission, un opérateur utilise l'unité 20 de préparation de mission, pour définir des paramètres de mission, et en particulier pour définir :
- les caractéristiques permettant à l'unité 20 de déterminer la trajectoire à suivre par chaque drone 8 du système 1, qui sera utilisée lors de la réalisation de la mission ; et
- les caractéristiques du signal qui sera émis par le générateur (radiofréquence ou infrarouge) 11, 12 de chaque drone 8 du système 1.

Les paramètres de mission, et en particulier la trajectoire des drones et de la cible aérienne ou des cibles aériennes à simuler et les caractéristiques du signal à émettre, déterminés lors de la préparation de la mission, sont enregistrés :
- dans une base de données 29 du dispositif 13, et par exemple de l'unité 21, comme représenté sur la figure 3 ; et/ou
- dans une base de données 30 (figure 2) de l'unité centrale 18 du drone 8.

Lors de l'étape E2 de réalisation de la mission, ces paramètres de mission sont transmis aux moyens 10 (via l'autopilote) et au générateur de signal 11, 12 du drone 8 pour mettre en œuvre la mission. Ces paramètres de mission sont transmis aux moyens 10 et au générateur de signal 11 ou 12 soit tels quels (s'ils sont utilisables tels quels) en transitant via l'unité centrale 18, soit si nécessaire après traitement par l'unité centrale 18 pour les adapter à des ordres utilisables par les moyens 10 et le générateur de signal 11, 12.

Plus précisément :
- s'ils sont enregistrés dans la base de données 29 du dispositif 13, ils sont transmis au drone 8 (et notamment à l'unité centrale 18 drone 8) via l'unité d'émission/réception 15 du dispositif 13 qui coopère avec l'unité d'émission/réception 16 du drone 8 ; et
- s'ils sont enregistrés dans la base de données 30, ils sont transmis directement aux moyens 10 et au générateur de signal 11, 12.

Lors de l'étape E2 de réalisation de la mission, on fait voler chaque drone 8 du ou des ensembles 7 de drones du système 1 à proximité (généralement à une distance inférieure à 2 kilomètres) du système de surveillance 3. Plus précisément, chaque drone 8 vole (de façon autonome ou sous la commande d'un opérateur au sol) suivant la trajectoire prédéterminée correspondante (définie par les paramètres de la mission). De plus, lors de ce vol, le générateur de signal 11, 12 de chaque drone 8 émet les signaux (radiofréquence ou infrarouge ou autre) correspondants (définie par les paramètres de la mission).

La trajectoire suivie et le signal émis par chaque drone 8 sont tels qu'un senseur (par exemple un radar 4 ou un senseur infrarouge 5) du système de surveillance 3 croît détecter un engin volant (c'est-à-dire une cible aérienne 2) volant à une distance plus grande du système de surveillance 3, comme précisé ci-dessous, et qu'il considère cet engin volant comme étant réel. Le drone 8 simule ainsi une cible aérienne 2.

De plus, tous les drones de chaque ensemble 7 de drones sont synchronisés pour simuler une seule et même cible aérienne. A titre d'exemple, dans le mode de réalisation de la figure 1, les drones 8A et 8B de l'ensemble 7 sont synchronisés pour simuler la cible aérienne 2A.

Cette synchronisation consiste à adapter les vols des drones 8A et 8B l'un à l'autre, ainsi que les émissions de signaux par les générateurs de signal 11 et 12. Les drones de l'ensemble 7 sont commandés pour voler et pour émettre des signaux, afin de satisfaire cette synchronisation. Cette synchronisation de tous les drones de l'ensemble 7 est réalisée, à la fois :
- spatialement. Les drones de l'ensemble 7 sont commandés pour se déplacer dans l'espace afin de suivre les trajectoires prescrites de manière à se trouver à une position prescrite (sur la trajectoire prescrite correspondante) ;
- temporellement. Les drones de l'ensemble 7 sont commandés pour se déplacer dans l'espace afin de suivre les trajectoires prescrites de manière à se trouver à la position prescrite à un instant donné ; et
- pour être cohérents par rapport à la cible aérienne 2 qu'ils simulent et éviter les risques de collision.

Par cette synchronisation (triple), les drones de l'ensemble 7 de drones sont commandés pour simuler, efficacement, une seule et même cible aérienne.

Lors de l'étape E2 de réalisation de la mission, chaque drone 8 émet donc un signal, soit par un générateur radiofréquence 11, soit par un générateur de signal infrarouge 12, qui est destiné à être détecté par un senseur correspondant (par exemple un radar 4 ou un senseur infrarouge 5).

Plus précisément, le générateur de signal infrarouge 12 est un illuminateur infrarouge, c'est-à-dire un dispositif usuel apte à émettre un signal infrarouge, tel qu'illustré par une flèche 25 en pointillés sur la figure 1. Les caractéristiques (de ce signal infrarouge, et en particulier son amplitude, sont déterminées pour que le signal infrarouge soit similaire à un signal infrarouge (ou point chaud) émis par une cible aérienne réelle, par exemple un avion, un hélicoptère, un drone, un missile ou un autre engin mobile que l'on souhaite simuler. Dans une variante particulière, le générateur de signal infrarouge 12 génère plusieurs points lumineux, pour être le plus représentatif possible de la forme de la cible. Dans ce cas, chaque point lumineux est piloté en amplitude.

Ce signal infrarouge lorsqu'il est émis par le générateur infrarouge 12 du drone est détecté par un senseur infrarouge 5 du système de surveillance 3.

Le senseur infrarouge 5 du système de surveillance 3 croît ainsi, par la détection de ce signal infrarouge 25 émis par le drone 8A (figure 1), détecter une zone chaude d'une cible aérienne réelle (par exemple ses réacteurs ou une autre partie présentant une signature infrarouge caractéristique et connue) et donc détecter cette cible aérienne réelle.

L'unité centrale 18 (ou dans une autre variante, le dispositif 13) détermine les caractéristiques du signal infrarouge à émettre en fonction de la position et de la présentation de la cible aérienne simulée par rapport au senseur infrarouge 5. Ceci permet d'améliorer la représentativité de la cible aérienne simulée. Dans un mode de réalisation simplifié, on prévoit que le niveau lumineux reste constant.

Quant au générateur radiofréquence 11, qui est réalisé par exemple à partir d'une technologie DRFM (pour « Digital Radio Frequency Memory » en anglais), il a notamment pour objet de simuler une cible aérienne pour un radar 4.

Pour ce faire, le générateur radiofréquence 11 comprend, comme représenté schématiquement sur la figure 7 :
- un détecteur 11A pour détecter un signal radiofréquence initial émis par le radar 4, tel qu'illustré par des flèches 26 en pointillés sur les figures 1, 4 et 5. Le détecteur 11A peut également atténuer le signal reçu ;
- une unité de traitement 11B pour déterminer et générer un signal radiofréquence de réponse, en fonction du signal radiofréquence initial détecté par le détecteur 11A et des caractéristiques (distance par rapport au radar, vitesse) de la cible aérienne que l'on souhaite simuler. Pour ce faire, l'unité de traitement 11B convertit d'abord le signal reçu en un signal numérique, le traite et recrée un signal radiofréquence (conversion numérique-analogique). En fonction de la fréquence du signal reçu, l'unité de traitement 11B peut aussi faire une transposition (descente en fréquence) pour s'adapter à la technologie du DRFM, et une remontée en fréquence après conversion analogique-numérique pour une réémission ; et
- un émetteur 11C pour émettre ce signal radiofréquence (de réponse) vers le radar 4, tel qu'illustré par des flèches 27 en pointillés sur les figures 1, 4 et 5. L'émetteur 11C peut également amplifier ou atténuer le signal si besoin.

Lorsqu'il détecte ce signal radiofréquence (de réponse), le radar 4 croît détecter l'écho d'une cible aérienne et ainsi détecter une cible aérienne qui présente les caractéristiques (de distance et de vitesse notamment) prises en compte par l'unité de traitement 11B pour déterminer le signal radiofréquence (de réponse).

Ces caractéristiques prises en compte par l'unité de traitement 11B peuvent correspondre à des paramètres de mission qui sont définis lors de la préparation de la mission.

Le système de surveillance 3 (de site) peut comprendre comme senseur utilisant un signal radiofréquence, tel que le signal radiofréquence 27 émis par le générateur de signal radiofréquence 11 de la figure 1, un radar 4, mais également un goniomètre (non représenté) ou un dispositif d'identification ami ou ennemi (également non représenté).

Le dispositif d'identification ami ou ennemi (ou IFF pour « Identification Friend or Foe » en anglais) est un dispositif d'identification qui permet de reconnaître, parmi des engins volants détectés, les engins volants amis et les engins volants ennemis.

Dans un mode de réalisation destiné à émettre, lors de l'étape E2 de réalisation de la mission, un signal à destination d'un goniomètre ou d'un dispositif d'identification ami ou ennemi, ces senseurs sont utilisés de façon usuelle et le générateur radiofréquence 11 émet un signal approprié pour leur utilisation.

Par conséquent, le système 1 est apte à simuler une cible aérienne qui est simulée comme étant située à une distance élevée du système de surveillance 3 à partir de drones 8 volant à une distance bien plus réduite du système de surveillance 3.

A titre d'illustration non limitative :
- chaque drone 8 du système 1 peut être situé à une distance du système de surveillance 3, telle que la distance D1 sur la figure 1 pour le drone 8B, qui est comprise entre 50 mètres et 2 kilomètres ; et
- le système 1 peut simuler une cible aérienne qui est située (de façon virtuelle) à une distance du système de surveillance 3, telle que la distance D2 sur la figure 1 pour la cible aérienne 2A, qui est comprise entre 1 kilomètre (ou, a minima, une distance proche de la distance entre le drone et le système de surveillance 3) et plusieurs centaines de kilomètres.

Sur les figures 1, 4 et 5 très schématiques, les drones et les cibles aériennes ainsi que leurs distances par rapport au système de surveillance 3, ne sont pas représentées à la même échelle pour des raisons de clarté de ces figures.

Lors de l'étape E2 de réalisation de la mission, l'unité centrale 18 utilise donc la trajectoire (ou trajectoire prescrite) déterminée en préparation de mission pour envoyer des ordres aux moyens 10 (via l'autopilote) afin qu'ils fassent voler le drone 8 le plus proche possible de cette trajectoire prescrite.

Lors de l'étape E2 de réalisation de la mission, un contrôle de la mission est réalisé (à la sous-étape E2A de contrôle de la mission) notamment à partir du sol à l'aide de l'unité 22 de contrôle de mission. Ce contrôle de mission permet notamment de détecter lorsque le drone s'écarte de la trajectoire prescrite (qu'il doit suivre).

Dans ce cas, la trajectoire du drone est corrigée (en temps réel) par un dispositif de modification de trajectoire pour que le drone revienne sur la trajectoire prescrite et la suive de nouveau.

Dans un premier mode de réalisation, le dispositif de modification de trajectoire 23 fait partie du dispositif 13 de gestion de mission. Ce dispositif de modification de trajectoire 23 est configuré pour automatiquement, à partir du sol, détecter un écartement de la trajectoire prescrite par le drone 8, déterminer des ordres (de correction de trajectoire) pour faire revenir le drone sur la trajectoire prescrite et transmettre ces ordres au drone 8 (et notamment à l'unité centrale 18 du drone 8) via l'unité d'émission/réception 15 du dispositif 13 qui coopère avec l'unité d'émission/réception 19 du drone 8. Ces ordres (de correction de trajectoire) sont alors appliqués aux moyens 10 du drone 8.

Dans un second mode de réalisation, en complément ou en variante du premier mode de réalisation, le système 1 comprend un dispositif de modification de trajectoire 28 qui est monté sur le drone 8 et qui est, de préférence, intégré au moins en partie dans l'unité centrale 18. Ce dispositif de modification de trajectoire 28 est configuré pour détecter sur le drone 8 (notamment à l'aide du dispositif de positionnement 31) un écart entre sa trajectoire courante et la trajectoire prescrite, pour déterminer des ordres de correction (de trajectoire) afin de faire revenir le drone sur la trajectoire prescrite et pour transmettre ces ordres (de correction de trajectoire) aux moyens 10.

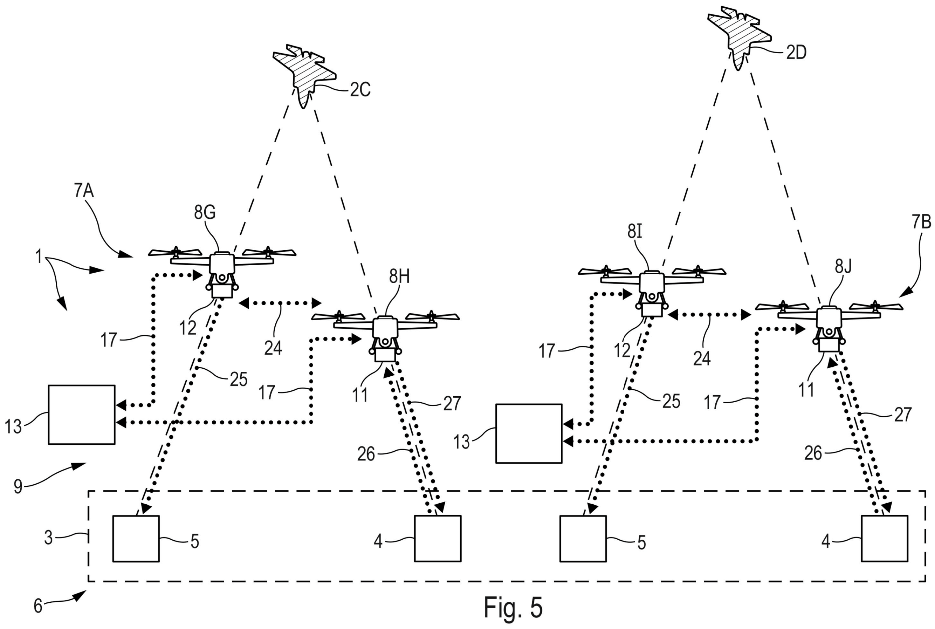

Ce second mode de réalisation, relatif à une correction automatique de la trajectoire sans intervention de la station sol (c'est-à-dire sans intervention du dispositif 13 de gestion de mission), peut également être mis en œuvre en cas de risque de collisions entre deux drones du système 1. Un tel risque peut notamment se présenter lorsque le système 1 comprend un nombre élevé de drones, par exemple plusieurs dizaines de drones, qui évoluent dans une zone géographique restreinte. Dans ce cas, les deux drones peuvent communiquer ensemble, via leurs unités d'émission/réception 19 respectives (figure 2), comme illustré par les doubles flèches 24 sur les figures 1 et 5, ou en passant par le dispositif 13, et ils peuvent notamment se transmettre leurs positions respectives, déterminées par exemple à l'aide de leurs dispositifs de positionnement 31.

Dans les premier et second modes de réalisation décrits ci-dessus, la trajectoire d'un seul drone est corrigée pour recoller à la trajectoire définie en préparation de mission. Cela implique une phase transitoire pendant laquelle les drones (simulant la même cible aérienne) ne sont pas synchrones.

Aussi, dans une variante de réalisation de ces premier et second modes de réalisation, les trajectoires et les paramètres de tous les drones (simulant la même cible aérienne) sont corrigées simultanément afin de garder toujours la cohérence de la cible. Dans cette variante de réalisation, le calcul peut être fait au sol (via le dispositif 13 de gestion de mission) ou à bord des drones (via l'unité centrale 18).

Dans un autre mode de réalisation, le dispositif de modification de trajectoire 23 du dispositif 13 de gestion de mission est utilisé par un opérateur pour modifier en temps réel la trajectoire de la cible aérienne simulée. Les ordres de correction sont transmis via les liaisons 17 à l'ensemble des drones simulant la cible aérienne, afin de modifier les trajectoires de tous les drones, ainsi que les paramètres des générateurs de signal utilisés, et ceci en fonction de la nouvelle trajectoire de la cible aérienne simulée. Cette modification de trajectoire est réalisée en réponse à une commande effectuée par un opérateur à l'aide d'un organe de commande, notamment manuel tel qu'un joystick par exemple, qui va commander la modification de la trajectoire cible aérienne, ou à une activation par l'opérateur d'un ou de scénarios différents (ou de tranches de scénarios, comme demander par exemple de faire une manœuvre). De plus, le scénario peut être mis en attente (avec le drone amené en vol stationnaire), puis peut être repris quand cela sera nécessaire.

Dans l'exemple simplifié de la figure 1, le système 1 comporte un seul ensemble 7 comprenant deux drones 8A et 8B.

Dans le cadre de la présente invention, le système 1 peut comprendre une pluralité d'ensembles 7 (dont chacun est destiné à simuler une cible aérienne particulière), et notamment, parmi eux, un ou plusieurs ensembles 7 qui comportent plus de deux drones.

Ainsi, dans un mode de réalisation particulier, représenté à titre de simple illustration non limitative sur la figure 4, pour simuler une même cible aérienne 2B, le système 1 comprend, en plus d'un drone 8C équipé d'un générateur de signal d'un premier type, en l'occurrence d'un générateur de signal infrarouge 12, et d'un drone 8D équipé d'un générateur de signal d'un second type (différent du premier type), en l'occurrence d'un générateur de signal radiofréquence 11, deux drones supplémentaires équipés chacun d'un générateur de signal, en l'occurrence un drone équipé 8E d'un générateur de signal infrarouge 12 et un drone 8E équipé d'un générateur de signal radiofréquence 14.

Dans ce mode de réalisation particulier, les drones 8C, 8D, 8E et 8F de l'ensemble 7 sont synchronisés pour simuler la cible aérienne 2B.

Dans l'exemple particulier de la figure 4, le système 1 est ainsi en mesure de stimuler quatre senseurs du système de surveillance 3 (à savoir deux radars 4 et deux imageurs infrarouges 5). Il est également envisageable que le ou les drones supplémentaires soient équipés chacun d'un générateur de signal d'un type autre que les types de ceux des drones 8C et 8D. Sur la figure 4, les liaisons 17 qui existent entre les différents drones 8C, 8D, 8E et 8F de l'ensemble 7 ne sont pas représentées pour des raisons de simplification du dessin.

Par ailleurs, dans un autre mode de réalisation particulier, représenté sur la figure 5, le système 1 comprend à la fois :
- un ensemble 7A de drones comprenant des drones 8G et 8H qui sont destinés à simuler une même cible aérienne 2C, le drone 8G étant équipé d'un générateur de signal infrarouge 12 et le drone 8H étant équipé d'un générateur de signal radiofréquence 11 ; et
- un ensemble 7B de drones comprenant des drones 8I et 8J qui sont destinés à simuler une même cible aérienne 2D, le drone 8I étant équipé d'un générateur de signal infrarouge 12 et le drone 8J étant équipé d'un générateur de signal radiofréquence 11

Dans ce mode de réalisation particulier, les drones 8G et 8H de l'ensemble 7A sont synchronisés pour simuler la cible aérienne 2C et les drones 8I et 8J de l'ensemble 7B sont synchronisés pour simuler la cible aérienne 2D.

Le système 1 est ainsi en mesure de simuler simultanément deux cibles aériennes 2C et 2D différentes. Sur l'exemple de la figure 5, les cibles aériennes 2C et 2D sont représentées sous forme d'avion. Bien entendu, les cibles aériennes 2C et 2D peuvent correspondre à deux engins volants de types différents.

Plus généralement, le système 1 est en mesure de simuler simultanément plus de deux cibles aériennes et chaque ensemble de drones peut comporter deux drones ou plus de deux drones, avec pour chaque ensemble de drones deux types différents ou plus de deux types différents de générateurs de signal.

Dans le cadre de la présente invention, le système de surveillance 3 et/ou le système d'arme 6, pour lesquels le système 1 doit simuler des cibles aériennes, peuvent être installés à différents endroits. Le système 1 est donc adaptable à des situations variées et/ou à des systèmes de surveillance 3 variés et/ou des systèmes d'arme 6 variés, dans la limite des caractéristiques du moyen de communication utilisé.

Ainsi, dans le cadre de la présente invention, les senseurs du système 1, tels qu'un radar ou un senseur infrarouge, peuvent être installés à poste fixe au sol. Ils peuvent également être montés sur un engin mobile, par exemple un engin terrestre, un navire ou un engin volant statique tel qu'un ballon attaché au sol par un fil.

Dans un mode de réalisation préféré, le système de surveillance 3 et le système d'arme 6 (qui comprend le système de surveillance 3) sont installés au sol (non représenté) et représentent des systèmes (de défense) sol-air.

Dans une première variante de réalisation, le système de surveillance 3 et le système d'arme 6 comprenant le système de surveillance 3 peuvent être installés (ou montés) sur un ou plusieurs navires (non représentés) et représenter des systèmes (de défense) mer-air.

En outre, dans une seconde variante de réalisation, par exemple au niveau d'un port, une partie du système de surveillance 3 et/ou du système d'arme 6 peut être installée au sol (non représenté) et le reste du système de surveillance 3 et/ou du système d'arme 6 peut être installé sur un ou des navires (non représentés).

Le système 1, tel que décrit ci-dessus, présente de très nombreux avantages. En particulier, ce système 1 est en mesure :
- de simuler, simultanément, de nombreuses cibles aériennes ;
- de simuler une même cible aérienne pour stimuler simultanément une pluralité de senseurs et plus particulièrement des senseurs de types différents ;
- de simuler tout type des cibles aériennes (ou engins volants), telles que par exemple un avion, un hélicoptère, un drone, un missile, ... ; et
- de simuler des cibles aériennes volant suivant tout type de trajectoire.

Le système de test 9 est ainsi en mesure de tester la chaîne complète du système d'arme 6, depuis la détection jusqu'à l'engagement (hors missile en vol), et ainsi au moins l'une des caractéristiques suivantes :
- la capacité de surveillance, de détection et de suivi de senseurs ;
- le bon comportement des algorithmes du système d'arme qui effectue la fusion de données, le traitement des données pour l'évaluation de la menace, le plan d'engagement, ... ; et
- la chaîne d'engagement avec le bon fonctionnement des algorithmes et des senseurs pendant cette phase.

Le système 1 et/ou le système de test 9 peuvent être utilisés dans de nombreuses applications différentes, et en particulier :
- pour la formation, notamment d'opérateurs du système de surveillance 3 et/ou du système d'arme 6 ;
- pour l'entraînement, notamment d'opérateurs du système de surveillance 3 et/ou du système d'arme 6 ;
- pour la calibration du système de surveillance 3 et/ou du système d'arme 6 ;
- pour des essais du système de surveillance 3 et/ou du système d'arme 6 ;
- pour la validation du système de surveillance 3 et/ou du système d'arme 6 ; et
- pour une démonstration.

## Revendications

1. Système de simulation d'au moins une cible aérienne, ledit système (1) comprenant au moins un ensemble (7) de drones (8A à 8J), chacun desdits drones (8A à 8J) étant équipé d'un générateur de signal (11, 12) apte à émettre un signal représentatif d'une cible aérienne (2A à 2D) à simuler,
**caractérisé en ce qu'**au moins l'un desdits drones de l'ensemble (7) de drones (8A à 8J) est équipé d'un générateur de signal (11) d'un premier type et au moins un autre drone de l'ensemble (7) de drones (8A à 8J) est équipé d'un générateur de signal (12) d'un second type différent dudit premier type et **en ce que** ledit système (1) comporte un dispositif de synchronisation (14) configuré pour synchroniser les drones de l'ensemble (7) de drones afin qu'ils simulent une seule et même cible (2A à 2D).

2. Système selon la revendication 1,
**caractérisé en ce que** le dispositif de synchronisation (14) est configuré pour synchroniser les drones (8A à 8J) de l'ensemble (7) de drones, à la fois :
- en temps ;
- dans l'espace ; et
- pour être cohérents par rapport à la cible aérienne (2A à 2D) qu'ils simulent et pour éviter des risques de collision.

3. Système selon l'une des revendications 1 et 2,
**caractérisé en ce qu'**il comporte au moins l'un des types suivants de générateur de signal :
- un générateur de signal radiofréquence (11) ;
- un générateur de signal infrarouge (12) ;
- un générateur de signal visible.

4. Système selon l'une quelconque des revendications précédentes, **caractérisé en ce qu'**il comprend une pluralité d'ensembles (7A, 7B) de drones, chacun desdits ensembles (7A, 7B) de drones étant configuré pour simuler une cible aérienne (2C, 2D).

5. Système selon l'une quelconque des revendications précédentes, **caractérisé en ce qu'**il comprend au moins deux ensembles de drones configurés pour simuler une même cible aérienne.

6. Système selon l'une quelconque des revendications précédentes, **caractérisé en ce qu'**il comprend un dispositif (13) de gestion de mission configuré pour pouvoir communiquer avec les drones au moins d'un ensemble (7) de drones.

7. Système selon la revendication 6,
**caractérisé en ce que** le dispositif (13) de gestion de mission comporte au moins l'une des unités suivantes :
- au moins une unité (20) de préparation de mission ;
- au moins une unité (21) de réalisation de mission ;
- au moins une unité (22) de contrôle de mission.

8. Système selon l'une quelconque des revendications précédentes, **caractérisé en ce qu'**il comprend au moins un dispositif de modification de trajectoire (23, 28) qui est configuré pour modifier la trajectoire d'au moins un drone.

9. Système selon la revendication 8,
**caractérisé en ce qu'**il comporte au moins un dispositif de modification de trajectoire (23) qui fait partie du dispositif (13) de gestion de mission et qui est configuré pour émettre des ordres de correction de trajectoire au drone (8), qui sont générés automatiquement et/ou par un opérateur.

10. Système selon l'une des revendications 7 et 8,
**caractérisé en ce qu'**il comporte au moins un dispositif de modification de trajectoire (28) qui est monté sur le drone (8) et qui est configuré pour modifier la trajectoire dudit drone (8).

11. Système selon l'une quelconque des revendications précédentes, **caractérisé en ce qu'**au moins certains desdits drones (8A à 8J) sont des drones multicoptère.

12. Procédé de simulation de cibles aériennes, ledit procédé (P) utilisant au moins un ensemble (7) de drones, chacun desdits drones (8A à 8J) étant équipé d'un générateur de signal (11, 12) apte à générer un signal représentatif d'une cible aérienne (2A à 2D) à simuler,
**caractérisé en ce qu'**au moins l'un des drones de l'ensemble (7) de drones est équipé d'un générateur de signal (11) d'un premier type et au moins un autre drone de l'ensemble (7) de drones (8A à 8J) est équipé d'un générateur de signal (12) d'un second type différent dudit premier type, et **en ce que** lesdits drones de l'ensemble (7) de drones (8A à 8J) sont synchronisés pour simuler une seule et même cible aérienne (2A à 2D).

13. Procédé selon la revendication 12,
**caractérisé en ce que** les drones (8A à 8J) de l'ensemble (7) de drones sont synchronisés, à la fois :
- en temps ;
- dans l'espace ; et
- pour être cohérents par rapport à la cible aérienne (2A à 2D) qu'ils simulent et pour éviter des risques de collision.

14. Système de test pour tester un système de surveillance, en particulier d'un système d'arme multi-senseur hétérogène,
**caractérisé en ce qu'**il comprend ledit système de surveillance (3) et au moins un système (1) de simulation de cibles aériennes selon l'une quelconque des revendications 1 à 11.

15. Système selon la revendication 14,
**caractérisé en ce que** le système de surveillance (3) comprend comme senseur, au moins l'un des éléments suivants :
- un radar (4) ;
- un senseur optique (5) ;
- un senseur coopératif.
